(19) Europäisches Patentamt / European Patent Office / Office européen des brevets

(11) **EP 3 763 429 A1**

(12) **EUROPEAN PATENT APPLICATION**

(43) Date of publication:
**13.01.2021 Bulletin 2021/02**

(21) Application number: **19184911.6**

(22) Date of filing: **08.07.2019**

(51) Int Cl.:
**B01D 15/18** (2006.01)    **G01N 30/86** (2006.01)
**G01N 30/88** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayer Aktiengesellschaft**
**51373 Leverkusen (DE)**

(72) Inventors:
• **Papadopoulos, Alexandros**
**51368 Leverkusen (DE)**
• **Mrziglod, Thomas**
**51368 Leverkusen (DE)**
• **Rubin, Hille**
**51368 Leverkusen (DE)**
• **Brandt, Heiko**
**51368 Leverkusen (DE)**
• **Schwan, Peter**
**51368 Leverkusen (DE)**

(74) Representative: **BIP Patents**
**c/o Bayer Intellectual Property GmbH**
**Alfred-Nobel-Straße 10**
**40789 Monheim am Rhein (DE)**

(54) **INFLUENCING A SEQUENTIAL CHROMATOGRAPHY IN REAL-TIME**

(57) What is disclosed herein describes a system and a method for influencing a sequential chromatography.

EP 3 763 429 A1

**Description**

Using sequential chromatography for the processing of proteins gains more and more importance as a sequential chromatography allows for a continuous process with a continuous input into the sequential chromatography and a continuous output of the sequential chromatography.

However, so far options for influencing sequential chromatography - for example a sequential chromatography which forms part of a protein purification system comprising several unit operations - are limited. This is the case even though a precise control of a sequential chromatography would in turn allow to keep important process parameters within predetermined operation ranges.

It was therefore an object of the present invention to provide improved methods for influencing a sequential chromatography.

This object was solved by a system for influencing a sequential chromatography comprising at least

- a fluid stream
- at least one measurement point
- at least one actuator
- at least one sequential chromatography
- at least one process control system influencing the at least one actuator in real-time

wherein

○ at the at least one measurement point at least one characteristic of the fluid stream corresponding to at least one actual process characteristic is measured, and

○ wherein said at least one detected process characteristic is transmitted in form of a signal to the at least one process control system,

○ wherein based on the at least one detected process characteristic of the fluid stream, i.e. the transmitted signal at least one mathematical or modelling component of the at least one process control system is configured to calculate at least one modified actuating value which is used to influence the at least one sequential chromatography in real-time either via directly influencing at least one actuator of the sequential chromatography and/or via influencing at least one actuator upstream of the sequential chromatography.

This system for influencing a sequential chromatography for examples allows to keep important process parameters e.g. critical quality attributes such as concentration of the protein to be purified ("target", $c_{Target}$) and concentrations of impurities ($c_{impurity}$) within predetermined operation ranges.

Moreover, since influencing the sequential chromatography in real time requires less volume in hold-up tanks etc. the system allows for a more efficient set-up.

In addition, the system described herein allows for a truly continuous regulation and control of upstream and downstream processes in protein purification.

As used herein the term "quality attribute" refers to

$$QA_1 = \int_{t_{(Elution,begin)}}^{t_{Elution,end}} c_{Target}(\tau) \cdot F_{Elution}(\tau)\, d\tau$$

and

$$QA_2 = \int_{t_{(Elution,begin)}}^{t_{Elution,end}} c_{Impurity}(\tau) \cdot F_{Elution}(\tau)\, d\tau \ ,$$

i.e. mass or amount of respective substance of interest.

In one example described below qualities attributes are influenced via altering the pH and salt concentration during at least one wash step of the sequential chromatography.

In one embodiment of a system for influencing a sequential chromatography as described herein, the system further comprising at least one unit operation.

In one embodiment of a system for influencing a sequential chromatography as described herein, the at least one process control system configured to calculate at least one modified actuating value further comprises

a) at least one regulator, at least one regulator used as controller and/or at least one controller for control of at least one means, wherein the at least one regulator or controller for the at least one means comprises at least one PID component which receives at least one signal comprising the at least one detected process characteristic from the at least one measurement point OR wherein the at least one regulator used as controller for the at least one means comprises at least one PID component which receives at least one predictive feedback signal based on at least one predicted process characteristic from at least one predictive model of the at least one means
and/or

b) at least one regulator, at least one regulator used as controller and/or at least one controller for control of the at least one sequential chromatography, wherein the at least one controller or regulator used as controller for control of the at least one sequential chromatography comprises at least one PID component which receives at least one feedback signal based on at least one detected process characteristic from a measurement point at the output of the sequential chromatography OR wherein the regulator used as controller for control of the at least one sequential chromatography comprises at least one PID component which receives at least one predictive feedback signal based on at least one predicted process characteristic from at least one predictive model of the at least one sequential chromatography
and/or

c) at least one controller such as a non-linear model predictive controller of the at least one sequential chromatography wherein the controller for the sequential chromatography receives at least one signal comprising the at least one detected process characteristic from the at least one measurement point, which in this case is upstream of the at least one sequential chromatography, and wherein the controller for the sequential chromatography in addition receives at least one feedback signal based on at least one detected process characteristic from at least one second measurement point at the output of the sequential chromatography OR wherein the at least one controller of the at least one sequential chromatography receives at least one signal comprising the at least one detected process characteristic from the at least one measurement point, which in this case is upstream of the at least one sequential chromatography, and wherein the controller for the sequential chromatography in addition receives at least one feedback signal based on at least one predicted process characteristic from at least one predictive model of the at least one sequential chromatography
and/or

d) at least one transfer function comprising at least one empirical model which takes into account the at least one signal comprising the at least one detected process characteristic from the at least one measurement point

characterized in that each of the mathematical or modelling components described under a)-d) is configured to calculate at least one modified actuating value which is used to influence the at least one sequential chromatography in real-time via the at least one actuator.

As used herein the term "sequential chromatography" refers to a chromatography system comprising at least at one point at least two columns in series, In one embodiment the sequential chromatography is selected from the group consisting of Chromacon chromatography, BioSC chromatography system, Sequential Multicolumn Chromatography, Periodic Counter Current (PCC) Chromatography, CaptureSMB and BioSMB.

In one embodiment the at least one means is selected from the group consisting of a valve, a unit operation, e.g. a residence time device or a concentration unit.

In one embodiment of a system for influencing a sequential chromatography as described herein, the predictive model of a) comprise at least one deterministic or at least one empirical model of the at least one means and the predictive models of b)-d) comprise at least one deterministic or at least one empirical model of the at least one sequential chromatography.

As used herein the term "empirical model" refers to a mathematical model based on empirical observations rather than on underlying physical phenomena of the system modelled.

As used herein the term "deterministic model" is used synonymous with the terms "mechanistic" and "mechanistic model" and refers to a mathematical model in which outcomes are precisely determined through known physical relationships among states and partial steps.

In one embodiment of a system for influencing a sequential chromatography as described herein, the at least one regulator, the at least one regulator used as controller and/or the at least one controller for the control of the at least one means is a regulator or controller for a unit operation.

In one embodiment of a system for influencing a sequential chromatography as described herein, the system further comprises at least one residence time device or at least one intermediate bag.

To a person skilled in the art it is clear that the at least one residence time device or at least one intermediate bag can be comprised in the at least one unit operation

In one embodiment of a system for influencing a sequential chromatography as described herein, the system further comprises at least one conditioning element, which the product stream passes prior to entering the at least one sequential chromatography.

In one embodiment of a system for influencing a sequential chromatography as described herein, the at least one measurement point is selected from the group consisting of at least one detector or a system outlet such as a three way valve.

In one embodiment, in which the at least one measurement point is at least one detector, said detector is selected from the group of detectors capable of detecting at least one multivariate UV, Vis, fluorescence, infrared scattered light and/or Raman signal

In another aspect what is described herein relates to a method for influencing a sequential chromatography comprising at least

- Measuring at least one characteristic of a fluid stream corresponding to at least one actual process characteristic at least one measurement point,
- Transmitting said at least one detected process characteristic in form of a signal to at least one process control system
- Calculating at least one modified actuating value based on the at least one detected process characteristic of the fluid stream using at least one mathematical or modelling component of the at least one process control system configured for the calculation
- Using the at least one modified actuating value to influence the at least one sequential chromatography in real-time either via directly influencing at least one actuator of the sequential chromatography and/or via influencing at least one actuator upstream of the sequential chromatography.

In one example the measurement point is a sampling outlet which can be connected to a Baychromat or other automatic sampling devices or robotic analytical at-line systems.

To a skilled person it is clear that the at least one measurement point can be at different locations within the system described above depending on the requirements of the chosen mathematical or modelling component. Moreover, more than one measurement point can be present, e.g. the system can comprise two or three or more measurement points.

For example the measurement point can be located before a unit operation - also termed upstream - and/or after a unit operation - also termed downstream - and/or before and/or after a residence time device and/or within a surge bag and/or a conditioning element and/or before and/or after the at least one sequential chromatography.

In one embodiment the unit operation is selected from the group consisting of ultrafiltration for concentration, diafiltration for buffer exchange, conditioning element for control of pH, conductivity, excipients, discharge module if material is predictively out of spec after seq. chromatography.

As used herein the term "mathematical or modelling component" refers to an algorithm altering the actuating value to arrive at the modified actuating value or calculates a modified actuating value which in turn is used to influence the at least one actuator and hence the sequential chromatography in real-time.

As used herein the term "unit operation" refers to a method step in a production process and/or to the device carrying out said method step in a production process. Examples of unit operations in the purification of proteins are a chromatography, a filtration, a diafiltration etc..

As used herein the term "real-time" refers to the fact that the at least one modified actuating value is calculated before a given portion, i.e. the sampled portion, of the fluid stream arrives at the sequential chromatography thereby making it possible to influence the sequential chromatography.

To a skilled person it is clear that the time required by a distinct volume element of the fluid stream to flow from the at least one sampling point to the at least one sequential chromatography depends on several factors such as the flow rate, the dimensions of the residence time device or the surge bag and the characteristic of the at least one means. Moreover, it is clear that under normal operation conditions the flow rate of the outlet fluid stream of the at least one means is not altered, instead the residence time or the surge bag level can be adapted- e.g. enlarged to prolong the time needed by a given sampled portion of the fluid stream to arrive at the sequential chromatography. However, the dimension of the residence time or the surge bag are restricted e.g. by product quality considerations.

As used herein the term "actual process characteristic" refers to a specific value of a process characteristic of the fluid flow as it is actually present under the given circumstances Examples of actual process characteristic of the fluid flow that can be measured are conductivity, pH value, flow rate, process component feed concentrations, and/or temperature.

In contrast examples for the process features of the sequential chromatography that can be influenced by the system described herein are conductivity of feed and/or buffer streams, pH value of feed and/or buffer streams, flow rate of feed and/or buffer streams, feed concentrations, critical quality attributes feed and/or buffer streams, cutting criteria, buffer compositions, column volume, loading density feed and/or buffer streams and/or loading time feed and/or buffer streams.

As used herein the term "set value" is used interchangeably with the terms "set point value" and "target value" and refers to a specific value of a process characteristic of the fluid flow or a process features of the sequentially chromatography as it should be under the given circumstances and/or at a specific point in time.

As used herein the term "modified actuating value" also termed "manipulated value" refers to the value calculated by the at least one process control system using the mathematical or modelling component and is employed to influence the at least one actuator.

As used herein the term "actuator" refers to a device that is capable of influencing the sequential chromatography via influencing the actual process characteristic and/or the process features of the sequentially chromatography and/or via adjusting the fluid flow. Examples of actuators are a pump, a valve and/or a slave controller. A slave controller could be a PID controller for inline conditioning of a feed stream or chromatography buffer.

In an alternative embodiment the empirical model corresponding to the transfer function comprised a complex data-driven algorithm, e.g. neural network. Such systems are trained to perform tasks by considering a training set of representative input-output data. For example the input refers to the actual process characteristics of the fluid stream entering the sequential chromatography, while the output is obtained by optimizing an available high-fidelity deterministic model of the sequential chromatography with the objective that the detected process characteristic of the product stream of the sequential chromatography is within a desired operating range.

Within the present application, controlling (in German "Regeln") refers to the measurement of the value which is to be influenced (control variable) and the continuous comparison of said value with the desired value (target value). Depending on the deviation between control variable and target value a controller calculates the value needed to minimize the deviation resulting in the control variable approaching the target value. Examples are thus a feedback or closed control loop.

In contrast regulating (Steuern) refers to setting a given process characteristic and/or process feature such as a pump rate to a specific value for a given period of time without external or process internal factors taking an influence on said specific value. An example is forward control or open loop control.

In one embodiment of the system the mathematical or modelling component is used to generate a process feedback signal. In other words the mathematical or modelling component enables the use of a regulator ("Steuerer") as controller ("Regler") and which is thus termed "regulator used as controller".

In one example mathematical or modelling component is used as state estimator (in German "Zustandsschätzer") enabling the use of a regulator ("Steuerer") as controller ("Regler") and which is thus termed "regulator used as controller".

A feedback signal refers to part of an output signal which is routed back into the at least one process control system as input.

Thus the expression "predictive feedback signal based on at least one predicted process characteristic from at least one predictive model of the at least one sequential chromatography and/or at least one means" refers to a situation where at least one predictive model of the at least one sequential chromatography and/or at least one means is used to generate a predictive process feature and/or process characteristics.

The at least one process control system uses said predictive process feature and/or process characteristic instead of a measured actual feedback signal.

In contrast, the expression "feedback signal based on at least one detected process characteristic from a measurement point at the output of the sequential chromatography" refers to a situation where the feedback signal was not predicted by a mathematical or modelling component but measured.

In one embodiment a feedback signal can be used to adapt the predictive model, e.g. to changing operating conditions for instance to arrive at different parameters for aging chromatography resins.

As used herein the term "fluid stream" or "fluid flow" refers to a flow of liquid and/or gas. In the sense of the current description is usually refers to the flow of liquid between the at least one sampling point and the at least one sequential chromatography. The fluid stream can comprise dissolved or partly dissolved species like a protein of interest or its precipitates, viral particles, salts, sugars and cell components and/ or salts, flocculations, precipitations and/or crystals.

As used herein the term "product stream" is used interchangeably with the terms "product flow" and "process stream" refers to a cell-free fluid from a heterogeneous cell culture fluid mixture that comprises a protein of interest. For sake of clarity the product stream is also a "fluid stream" or "fluid flow" in the sense of this description. Hence the input product stream enters a unit operation whereas the output product streams exits the unit operation.

In one embodiment of the method described herein the at least one modified actuating value is calculated by the at least one process control system using at least one configured mathematical or modelling component characterized in that the mathematical or modelling component comprises at least one surrogate model.

As used herein the term "surrogate model" is used interchangeably with "reduced order model" and refers to a mathematical or modelling component of reduced degree of detail compared to a mechanistic model. It mimics the behavior of the mechanistic model as closely as possible while being computationally cheaper to evaluate, e.g. as it requires less computing capacity.

It was surprisingly found that in many situations a surrogate model can replace a mechanistic model while still ensuring a sufficiently accurate value of the output prediction. In other words, when employing the at least one surrogate model, a considerable amount of information about the dynamics of some of the system states are not computed compared to a situation where a mechanistic model is employed. However, the sufficiently accurate prediction capabilities of the surrogate model for the target outputs still enable the calculation of a modified actuating value which is used to influence the at least one sequential chromatography in real-time

In theory, the concentration of all components in all liquids and the stationary phase of the chromatography resin could be calculated at all times during the BioSMB process cycle using a mechanistic BioSMB process model. However, mechanistic models need to calculate concentrations of all components in each phase in certain time intervals (given by the integrator step size) before arriving at a final solution. This is computational expensive and thus potentially too slow for the application in a mathematical or modelling component for enabling the calculation of a modified actuating value which is used to influence the at least one sequential chromatography in real-time.

A single surrogate model, such as an artificial neural network (ANN), of the entire BioSMB is only capable of linking sets of input signals and output signals. It therefore cannot be used to predict states with significant physical relevance in between process (partial) steps of the BioSMB. For example, would a single surrogate model be used to link inlet concentrations of the BioSMB to target yield and impurity burden, it would not be possible to evaluate column conditions for the events in between e.g. the column loading after the second pass 1.2 events (cf. detailed examples below). Moreover, surrogate models can only be applied with sufficient accuracy and robustness to data inside the range used for calibration. Determining the required training data thus constitutes a highly important aspect for the development of surrogate models to approximate complex behaviors. Hence, if the value of only one parameter shifts out of the trained range, the output of the surrogate model may be significantly off.

With respect to a surrogate model the term "train" refers to adjusting the model parameters using suitably algorithms to establish a mathematical relation between each output and its respective input.

In one embodiment the surrogate model is chosen from the group consisting of Regression, Partial Least Square (PLS) Regression, Neural Networks, Response surface models, Support-Vector Machines, Kriging, Radial Basis function, Space Mapping.

Ways of generating the data required to train the surrogate model are e.g. by using a mechanistic model to simulate the specific or a similar problem to generate a preliminary range of the input data, or by using process knowledge, or a combination of both approaches. Further approaches are known to the skilled person. Regardless of the chosen approach, ideally all relevant trajectories of the input signal of a specific step are used for training the surrogate model since this allows for an accurate prediction of outputs for all the inputs regarded as relevant in practice.

As used herein the term "input signal" refers to a concentration of the components of the fluid flow entering a given process step, i.e. to the concentrations of the input of a given process step.

As used herein the term "input data" refers to a range of input signals over a certain time frame and can also refer to column conditions prior to a given process step .

Examples of column conditions are e.g. concentration profiles of the bulk, pore and stationary phase. Moreover, given a specific input profile, the corresponding output which is necessary to train the surrogate model can be determined using a mechanistic model.

The type of output data is generally chosen by the user - e.g. column condition or outlet concentration-thus ensuring that the at least one surrogate model is trained to link the most relevant type of output data to the input data.

Following the training procedure, the surrogate model is thus configured to link inputs, within the considered (trained) range, to the corresponding outputs. Hence it is possible to directly calculate the desired output trajectories computationally fast with sufficient accuracy. In other words, the method described herein for generating a surrogate model enables a highly efficient calculation of the modified actuating value which in turn is used to influence the at least one sequential chromatography in real-time e.g. via enabling a faster calculation while using less computing capacity.

In one embodiment of the method where the mathematical or modelling component comprises at least one surrogate model, the input and/or output data of at least one surrogate model are parametrized.

Via parametrizing the data it is possible to employ data sets in which the raw data is too large to be used by a surrogate model, such as an ANN, directly. Possible methods for parametrization are Curve fitting, Partial Curve Fitting, Principal component analysis (PCA), Data sampling.

A "sub-model" or "sub model" models a specific part of the whole process cycle. The nature of the sub-model can be diverse, e.g. mechanistic model or surrogate model.

In one embodiment of the method where the mathematical or modelling component comprises at least one surrogate model, two or more surrogate sub models are linked together or a surrogate sub model is combined with a mechanistic sub-model. In this embodiment the output of one sub model can thus become the input for another.

The term "sub-step" used interchangeably with the term "sub step" on the other hand refers to an amount of time during the sequential chromatography process predetermined by the user.

Thus in one example during a given sub-step either a predetermined volume of fluid stream is applied to a given column or no fluid stream is applied to the column during said sub-step. During subsequent sub-steps, the flow rate, the content/composition of applied fluid stream or the manner of application - e.g. the gradient or step - may change. Defined sub-steps can be further subdivided in order to optimize the reproduction of the actual sub-steps in the at least one process control system, hence the sub-steps load 1.1. and load 1.2 could be exactly the same except for their time duration. Using the sub-steps allows for a more precise training of an ANN.

In other words, by employing at least two surrogate sub models where one surrogate sub model generates the input for the second surrogate sub model it is thus possible to use different surrogate sub models for different process steps in order to maximize the ratio between required accuracy and available/intended computing power. For example, a load step of a process could be modelled by an artificial neural network whereas the wash step of the same general process is modelled by a linear regression while the elution of the same general process is modelled by a mechanistic model. Using this approach it is ensured that the ideal model is used for each process step. This modular assembly of an overall model enables a highly flexible application in various scenarios and ultimately for a faster and less costly calculation of the modified actuating value which is used to influence the at least one sequential chromatography in real-time.

As used herein the term "overall model" refers to a model which comprises at least two sub-models.

In one example of this approach, each step of the BioSMB process cycle was regarded at a time. Therefore, it was possible to tailor the mechanistic model specifically to the individual steps of that process cycle (cf. detailed examples below) via employing sub-models for the individual process steps.

As a result, this tailored mechanistic model of a sub-step could be precisely discretized while still being computationally faster in comparison to a mechanistic model of the complete BioSMB. Consequently, using the given tailored model, more process scenarios (column conditions??) of specific process steps can be simulated in a given timeframe while providing a higher accuracy in comparison to a mechanistic model of the entire BioSMB. Moreover, the overall surrogate model comprised of the connected surrogate sub-models, which were trained with the data generated by the tailored mechanistic sub-models, can be also more accurate compared to a mechanistic model of the entire BioSMB process. Hence, this approach leads to an increase in accuracy while reducing computational costs. In the described example, the salt concentration and pH were constant throughout a majority of the steps of the BioSMB process cycle. Thus in the individual detailed sub-models of the separate BioSMB process steps, both components were omitted thereby simplifying the model complexity. Further examples of tailoring individual mechanistic models to individual process steps are given for example by different levels of space and time discretization of process cycle steps or even by a change of the column / pore model or isotherm. In addition, the parametrization technique for input and output data as well as the type of surrogate model can be chosen according to the specific process which is to be modelled in a given situation.

Moreover, in one embodiment of the method where the mathematical or modelling component comprises at least one sub model and two or more sub models are linked (i.e. connected) together one or more additional calculations are performed before the output of a given sub model is used as input for another sub model.

Hence these additional calculations allow a modification of the output of a given sub model e.g. a surrogate model before said output is used as input for another sub-model. For example, the output of a given surrogate model is a column concentrations of a target component. Said column was discretized with 50 points, hence the output of said surrogate model consists of 50 data points (from x= 0 cm to x = column length) wherein each data point corresponds to one target concentration value. In this example, the next - i.e. second - surrogate model however was trained for a discretization of 100 data points. Thus, the 50 target concentration values - i.e. the output of the first surrogate model - have to be modified via additional calculations to generate 100 target concentration values as input for the second surrogate model.

Examples of additional calculations are linear interpolation or transformations based on a chosen parametrization of the process. These additional one or more calculations increase the flexibility of the method in order to adapt it to different scenarios for example allowing for changes in column discretization as described above.

Overall employing additional calculations allows for a highly flexible application in various scenarios and ultimately for a faster and less costly calculation of the modified actuating value which is used to influence the at least one sequential chromatography in real-time.

In a preferred embodiment of this method wherein the mathematical or modelling component comprises at least one surrogate model, at least one surrogate model comprises at least one artificial neural network.

In another aspect the above method is used for optimizing the reproduction of the sequential chromatography process in the at least one mathematical or modelling component of the at least one process control system.

In one embodiment of the method for influencing a sequential chromatography the at least one process control system comprises at least one mathematical or modelling component and is configured to calculate the at least one modified actuating value wherein the method comprises the following steps:

- Defining the control scenario
- Defining the sub-steps of the defined control scenario.
- Defining the relevant input data of each sub-step
- Using at least one mechanistic model to determine accurate outputs to each input signal of the relevant input data
- Training at least one surrogate model using the input data and output data generated above
- Calculating a modified actuating value which is used to influence the at least one sequential chromatography in real-time either via directly influencing at least one actuator of the sequential chromatography and/or via influencing at least one actuator upstream of the sequential chromatography using the trained at least one surrogate model.

A skilled person understands that the relevant input data can be multifaceted and can include a wide range of possible profiles as it does not only have to be limited to input data which is expected for the specific sub-steps but can also include generic input data in an effort in increase the model generalization. The input data can for example also include inputs of constant values, linear shapes or exponential functions. These shapes may not be typically expected for the sub-steps but their inclusion in the input data may generate trained ANNs, which are capable of performing robustly over a wide input data range.

To someone skilled in the art it is clear, that different algorithms for training of the ANNs can be employed, which can be chosen from e.g. from the group consisting of back propagation, or approaches, which iterate the solvability condition for accurate learning such as the method developed by Bärmann et al. (F. Bärmann and F. Biegler-König. On a class of efficient learning algorithms for neural networks. Neural Networks, 5(1):139-144, 1992). Moreover, multiple algorithms for the ANN network parameter adjustment during training can be utilized such as gradient descent, conjugate gradient, Newtown's method, Quasi Newton, Levenberg-Marquardt, evolutionary algorithms, and genetic algorithms.

In a preferred embodiment the above method comprises training of at least two surrogate sub models or generation of at least one mechanistic sub-model and training of at least one surrogate sub model as well as linking the individual sub models to generate an overall model which can be used either for prediction or control purposes or both. If it is used for control purposes the process control system calculates a modified actuating value which is used to influence the at least one sequential chromatography in real-time either via directly influencing at least one actuator of the sequential chromatography and/or via influencing at least one actuator upstream of the sequential chromatography using the overall model.

To a person skilled in the art it is clear that the sub-steps as well as the input data can be defined for example by

- Simulating a similar example scenario and extrapolating the results
- Process knowledge
- A combination of both

The generation of training data in the example scenario represents a customizable step. In general, the preliminary input data can be used to generate similar shapes by scaling with constant factors. Another approach is to create, for a given sub-step, a data set with high variance in terms of possible input trajectories. These input data shapes can for example be constant profiles, linear profiles or completely arbitrary profiles. The shapes may not be typically expected for the respective sub-steps but their inclusion in the input data generate trained ANNs, which are capable of performing robustly over a wider input data range

Moreover, a skilled person realizes that an increase in the number of considered sub-steps goes in hand with a more detailed process model, but also required a greater effort in the model development.

For example, the control of a wash step by utilizing the impurity concentration in the feed stream corresponds to the defined control scenario. The sub-steps of the system in this example are defined as the load phase, wash phase, second pass (etc. cf. detailed examples below). Each of these phases, i.e. the sub-steps, requires an individual surrogate sub model. Thus, the relevant process parameters and their values have to be determined for each phase. In the case of the "second pass" phase in which the breakthrough of the feed stream reaches the columns, the surrogate sub model is to be trained for the relevant second pass concentration. Hence, the chosen inputs are the target and impurity feed concentrations. In order to establish the values of these relevant process parameters, it is important to consider the following example: If a feed stream with a target concentration of 8 g/l and 100.000 ppm impurity continuously reaches the BioSMB, the time point of the first column breakthrough as well as the values of the target concentration and the impurity concentration in the second pass are calculated. The resulting values correspond to the preliminary input range. However, it has been established that the impurity concentration is not constant at 100.000 ppm but can fluctuate between 200 and 200.000 ppm. Using scenario extrapolation and/or process knowledge leads to a final setting of the impurity input parameter for the second pass at a value of 500 to 150.000 ppm. As the impurity concentration also differs without the second pass phase, the mechanistic model input range is generated. In this exemplary scenario, 1200 different profiles of the impurity concentration during second pass are calculated by a mechanistic model to obtain the output impurity concentration for each case. Subsequently, the input impurity concentration values of the second pass are either parametrized and then linked to the calculated output values or directly linked to the calculated output values.

EXAMPLES

The examples below describe how a modified actuating value which is used to influence the at least one sequential chromatography in real-time is obtained. To a skilled person it is clear that due to the nature of the sequential chromatography a multitude of modified actuating values are calculated to influence the sequential chromatography in real time. The examples are simulated examples.

I) General description:

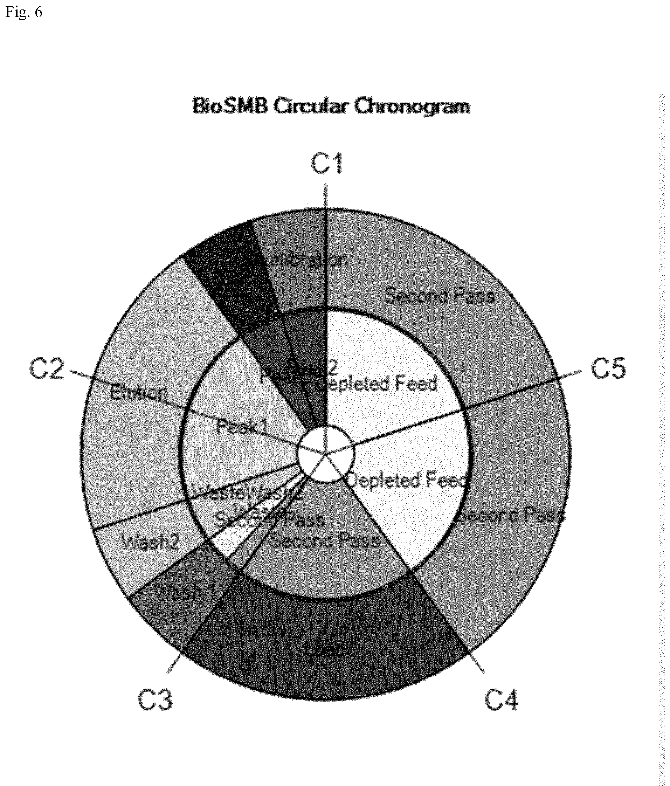

It was assumed that the sequential chromatography would run continuously for at least three days.
The employed sequential chromatography was a BioSMB with a periodic counter current chromatography process cycle as depicted in Figure 6 including the following 7 sub-steps:

1) Load,
2) Wash1,
3) Wash2,
4) Elution,
5) Clean in place (CIP) & Re-equilibration,
6) Second Pass 1,
7) Second Pass 2.

These sub-steps were not represented 1:1 in the employed at least one mathematical or modelling component of at least one process control system influencing the at least one actuator in real time. Instead some sub-steps were split resulting in the following sub-steps:

1) Load 1.1,
2) Load 1.2,
3) Wash 1.1,
4) Wash 1.2,
5) Wash 2,
6) Elution 1,
7) Elution 2,
8) CIP & Re-equilibration,
9) Second Pass 1.1,
10) Second Pass 1.2,
11) Second Pass 2.1,
12) Second Pass 2.2.

Using the sub-steps allowed for a more precise training of the ANN.
In addition a control cycle, i.e. a part of the BioSMB process cycle, which is used for the control scenario was defined. The control cycle included: Second Pass 1.1, Second Pass 1.2, Second Pass 2.1, Second Pass 2.2, Load 1.1, Load 1.2, Wash 1.1, Wash 1.2, and Wash 2.
The duration of the second pass 1.1, second pass 2.1, load 1.1, and wash 1.1 sub-steps were equal and visualized (cf. Figure 6) in the part of the wash 1 sub-step, for which the effluent is denoted "Second Pass". The rest of the respective sub-step times attained the ".2"-suffix. The elution sub-step was split in 2 equally long sub-steps "Elution 1" and "Elution 2". Therefore, column 2 was initiated at the beginning of the elution 2 sub-step. The switch time is visualized by the length of the Load sub-step.
To someone skilled in the art it is clear, that the exact model configuration is highly specific to the regarded problem and needs to be determined by the user for each case individually. In this example the loading step consisted of one column in the first-, and two columns in the second pass. The design of the column dimensions was mainly dependent on the maximum flow rate, mass transfer coefficient, static binding capacity, and desired capture efficiency of the regarded scenario.
The columns were initiated at different starting points of the BioSMB process cycle and repeated the cycle several times. To someone skilled in the art it is clear that the composition and flow rates of the fluid streams into the columns differ in order to accomplish the desired separation effect.

In this exemplary process cycle the five columns Col 1 - 5 were initiated at the beginning of Second pass 1.1, Second pass 2.1, Load, Wash 1.1, and Elution 2, respectively. During Load, the inlet of Col 4 was governed by the flow rate $Q_{in,BioSMB}$) and the respective concentration of each specific component $c_{in,BioSMB}$. After finishing the load phase, Col 4 entered Wash 1.1. Here, the interstitial liquid volume was displaced by applying equilibration buffer. Wash 1.2 is the primary impurity reducing step in the process cycle. Here, a combination of high salt concentration and low pH results in reduced binding affinity of the components to the chromatography resin. As all components were subject to this effect, a favorable combination of the process parameters is characterized by a strong reduction in the binding affinity for the impurities while the binding affinity of the target molecule is largely retained. The wash buffer during wash 2 attained the same pH as the buffer employed during wash 1.2, but with a reduced salt concentration. The subsequently applied elution buffer was of relatively low pH resulting in the elution of the target component. During CIP/re-equilibration a combination of cleaning and neutralizing solution was applied to Col 4 guaranteeing a clean and preconditioned column for the upcoming binding sub-steps. The inlet fluid stream of the Second pass 1.1 and 2.1 was the mixed effluent of Wash 1.1 and Load 1.1. During Second Pass 1.2 and 2.2, the column inlet fluid stream was the effluent of the column in Load 1.2. Therefore, In Second Pass 1.1, Col 4 was first loaded by the mixed effluent of Col 1 in Wash 1.1 and Col 2 in Load 1.1 and Wash 1.1, respectively, before being loaded in Second Pass 1.2 by the effluent of Col 2 only. By analogy, during the Second Pass 2 sub-steps, the inlet to Col 4 was first determined by the mix of the effluent of Col 3 and 2 before switching to the effluent of column 3 only. Afterwards, the cycle was repeated.

As used herein the term "Switch time" refers to the time duration in which one column in the BioSMB process cycle arrives at the starting point of the upstream initiated column. This duration is typically the duration of the Load, Second Pass 1, and Second Pass 2 sub-step.

In some specific examples the concentrations of the target protein and the impurities were available as feedback signals from a measurement point at the output of the BioSMB, i.e. of the "eluate stream" exiting the BioSMB. Both values were used to determine the QAs.

The concentrations of the target protein and the impurities can be influenced by manipulating the pH value and the salt concentration during the wash 1 step.

It should be noted that in the examples the chromatographic column as represented in the at least one mathematical or modelling component incorporated 3 phases: bulk, pore, and stationary.

For calculation of the modified actuating value which was used to influence the at least one sequential chromatography in real-time the following basic set up was assumed:

1. A continuous fluid stream with the constant flow rate $Q_{harvest}$ = 2000 l/d and a target component concentration of

$$c_{harvest,target} = a + b \cdot e^{-d \cdot t}$$

where the model coefficients are given as $a$ = 1.057 g/l, $b$ = 7.509 g/l, and $d$ = 8.303·$10^{-3}$ 1/min. Furthermore, an impurity with a constant concentration of $c_{harvest,impurity}$ = 1.45e - 8 mol/l during the simulation time was assumed. Both concentrations are combined in the vector $c_{harvest}$.

2. A continuous concentration skit (CCS) using a transmembrane filtration module governed by

$$\frac{d(V_{CCS})}{dt} = Q_{in,CCS} - Q_{out,CCS} - Q_{filtrate} = 0,$$

and

$$V_{CCS} \frac{d(c_{CCS})}{dt} = Q_{in,CCS} \cdot c_{in,CCS} - Q_{out,CCS} \cdot c_{CCS},$$

where $V_{CCS}$ denotes the volume of the CCS. $Q_{in,CCS}$ and $Q_{out,CCS}$ constitute the flow rates of the fluid stream into and out of the module, respectively. The vectors of concentrations of the fluid stream are denoted by $c_{in,CCS}$ and $c_{out,CCS}$. $Q_{filtrate}$ represents the flow rate of the component-free filtrate leaving the CCS. No leakage was assumed.

3. An ideal continuously stirred hold-up tank modeled by

$$\frac{d(c_{tank} \cdot V_{tank})}{dt} = Q_{in,tank} \cdot c_{in,tank} - Q_{out,tank} \cdot c_{tank},$$

and

$$\frac{d(V_{tank})}{dt} = Q_{in,tank} - Q_{out,tank},$$

in which $c_{tank}$ constitutes the vector of concentrations and $V_{tank}$ the volume of the liquid inside the hold-up tank. The flow rates of the fluid stream into and out of the tank are denoted by $Q_{in,tank}$ and $Q_{out,tank}$, respectively. Furthermore, $c_{in,tank}$ describes the vector of concentrations in the fluid stream entering the tank.

4. An exit fluid stream out of the system with the constant flow rate $Q_{in,BioSMB}$ and the time-varying vector of concentrations $c_{in,BioSMB}$ was connected to a periodic counter chromatography system (BioSMB) model.

Since the modules (1. - 4.) were connected sequentially, the flow rates and concentrations of the fluid streams into each module were equal to the outputs of the upstream modules , i.e. $c_{in,tank}$ = $c_{out,CCS}$. No time delay between the process operations was assumed. The initial volume of the liquid inside the hold-up tank was set to 30 ml. All volume and fluid streams were initiated with a component concentration of 0 g/l. The lower limit of all flow rates was given by 0 ml/min.

The impurity concentration of the fluid stream leaving the sequential chromatography comprising the target, i.e. the harvest stream, was assumed to be constant during the process scenario run time. Since the target concentration was set to reduce over time, an increasing amount of buffer liquid was discarded in the CCS to attain a constant target concentration of $c_{tank}$. As a result, the concentration of the impurity of the fluid stream exiting the CCS increased during process time.

A mechanistic BioSMB process model, using parallel processing to solve the model specific partial differential equations (PDE) for 5 columns simultaneously, was utilized to simulate the process behavior. It employed a lumped rate model assuming axial dispersion, a linear film transfer and an equilibrium component concentration of the pore liquid. Furthermore, the model isotherm included salt and pH dependencies, competitive binding, kinetic effects and no component displacement effects.

For modelling purposes, the column was discretized along its length. For each of these discretization points, the concentration of each component in each respective phase was evaluated. For example, if the column was 50cm long and was discretized in 6 points, the points were spaced at 0cm, 10cm, 20cm, 30cm, 40cm, and at the column outlet, 50cm. Due to the consideration of 2 components this resulted in 6 x 2 x 3 concentrations. These 36 data points thus described the whole column state, i.e. the "column condition". During calculation of the modified actuating value which is used to influence the at least one sequential chromatography in real-time, column conditions may change over time. Hence, saving the column condition at a specific time point allowed for a re-initiation of the simulation at the given time point.

The rigorous mechanistic model was used to obtain an accurate representation of the entire BioSMB process. For real-time control and optimization purposes a surrogate model was utilized which, in comparison to the mechanistic model, enabled a faster computation of the process characteristics at the outlet of the BioSMB which in turn allowed an efficient calculation of the modified actuating values which were used to influence the BioSMB in real-time. In this example, the surrogate model was realized using ANNs which were trained using the mechanistic BioSMB process model. As a result, the ANNs emulated all relevant BioSMB process cycle steps independently and were able to calculate the output of the BioSMB process model.

In detail, the ANNs were used to calculate the column conditions after each sub-step from second pass 1.1 to wash 2. Moreover, the effluent concentration of load 1.1 - 1.2 and wash 1.1 were also of importance, as they constituted the component concentrations of the inlet fluid stream for the steps second pass 1.1 - 2.2. The specific input and output data, which were used to train the ANNs are not shown.

After determining the range of the input signals for the mechanistic model used to train the ANNs, the output to each input was determined using the mechanistic BioSMB model.

Subsequently, the input and output data were appropriately parametrized followed by the training of the ANNs using the parametrized profiles.

Following the training, the ANNs were capable of relating input trajectories, within the trained range, to their corresponding output profiles. Hence it was possible to directly evaluate the desired characteristics with high accuracy. Following this procedure, a surrogate model for each step of the BioSMB process cycle was generated. The output of one surrogate model was thus utilized as the input for the subsequent sub model e.g. column condition. In between, several additional calculations were performed. For example, the parametrized output of the first ANN was de-parametrized in order to carry out a linear interpolation to adjust the data to the discretization of the subsequent ANN. The input data for the next ANN was then in turn parametrized appropriately. This procedure allowed for a flexible interconnection of several ANNs to enable a mathematical description of the entire BioSMB process. Finally, the constructed and linked ANNs used the component concentrations of the feed fluid stream, and the wash buffers' salt concentration and pH as input and returned the corresponding target and impurity concentration of the eluate as output.

Thus, as stated above, it was surprisingly found that a significant amount of data calculated by the mechanistic model could be omitted and thus not included in the training of the surrogate model, here the ANN, while still ensuring an accurate calculation of a modified actuating value in real-time.

In A1 and A2, a PID controller controlling the concentration of the liquid inside a hold-up tank (see "ideal continuously stirred hold-up tank" above) was added as mathematical or modelling component. The set-point concentration of the PID controller was attained by manipulation of the concentration factor $F = Q_{in,CCS}/Q_{out,CCS}$ of the CCS. The control variable was limited by both the maximum possible concentration factor of the CCS, i.e. $F_{max} = 8$, and the maximum component concentration of any fluid stream of 20 g/l. Since the CCS allows no dilution of incoming fluid streams, the lower limit was set to $F_{min} = 1$.

This set-up, outlined for A1 and A2, enabled a constant flow into the BioSMB - thereby enabling a minimization of the hold-up tank - and is also valid for the remaining specific examples.

In A1, the at least one feedback signal based on the at least one measurement point at the output at the CCS is given by the concentrations $c_{tank}$.

In A2, the at least one predicted feedback signal $c_{tank}$ was determined using the process model and the measurement signal of the inlet fluid stream $c_{harvest}$.

In B1 and C1, the at least one feedback signal based on at least one measurement point at the output of the BioSMB, i.e. of the "eluate stream" exiting the BioSMB, was used for the control. It was assumed that the process characteristic detected from the at least one BioSMB outlet at the at least one measurement point was the target protein concentration and the impurity concentration. This was achieved in-silico by simulation of the mechanistic model as plant model.

In B2 and C2, it was assumed that process characteristics required for control of the at least one BioSMB cannot be measured at the BioSMB outlet but needs to be predicted online using a process model. The model prediction needs to be faster than the process itself, i.e. the most accurate model that can be simulated within the time required by one process step can be applied.

In B1 and B2, the mathematical or modeling component employed at least one PID controller. In comparison, in C1 and C2, the mathematical or modeling component employed at least one non-linear model predictive controller. The control objective is given as

$$\min_{c_{Wash,Salt}, pH_{Wash}} \left(-m_{Elution,Target}\right) = \min_{c_{Wash,Salt}, pH_{Wash}} \left(-\int_{t_{(Elution,begin)}}^{t_{Elution,end}} c_{Target}(t) \cdot F_{Elution}(t) \, dt \right)$$

subject to

$$\dot{c} = f\left(c, \theta, pH_{Wash}, c_{Wash,Salt}\right)$$

$$\frac{\int_{t_{(Elution,begin)}}^{t_{Elution,end}} c_{Impurity}(t) \cdot F_{Elution}(t) dt}{m_{Elution,Target}} < \varepsilon,$$

$$c_{Wash,Salt} \in [0.3,3] \frac{mol}{l}, \qquad pH_{Wash} \in [4.5,7],$$

Where $c$ denotes the vector of time-varying concentrations of the relevant components during the entire process cycle, while $\theta$ denotes a set of parameters of the surrogate model $f(.)$ which was trained using the mechanistic model. $pH_{Wash}$ and $c_{Wash,Salt}$ represent the manipulated variables that are utilized to influence the objective. Furthermore, $t_{Elution,begin}$ and $t_{Elution,end}$ are the elution start and end time, respectively, $\varepsilon$ denotes a predefined upper bound on the amount of impurity of 2000 parts per million (ppm). Thus, the derived optimized input variables were the pH and the salt concentration of the wash step that reduced the impurity level to the given threshold with minimum loss of the desired product. Since the result of the non-linear model predictive controller can be regarded individually for each control cycle, and prediction on subsequent outcomes was independent of the current state of the system, the prediction and control horizon of the non-linear model predictive controller can be set to 1. For a skilled user it is clear that the objective can be extended to include more than one process cycle which would result in a prediction and control horizon greater than one.

II) SPECIFIC EXAMPLES

It should be noted that these examples are described in accordance with the figures.

A1) UOP control

The set-point (9) of the PID controller (10) was equal to 8 g/l. The feedback value $c_{tank}$ (8) was assumed to be measured at the outlet of the tank, while the modified actuating value (11) was the resulting concentration factor $F$.

A2) UOP control

The set-point (9) of the PID controller (15) was equal to 8 g/l. Moreover, the same setting as described for A1 above was used except that the feedback value of $c_{tank}$ (14) was predicted using the above given process model (13) which receives the modified actuating value (11) and the measurement of the inlet fluid stream $c_{harvest}$ (12). Hence, when no model error is added, the model prediction of $c_{tank}$ is ideal.

B1) Discrete PID control using a BioSMB feedback signal

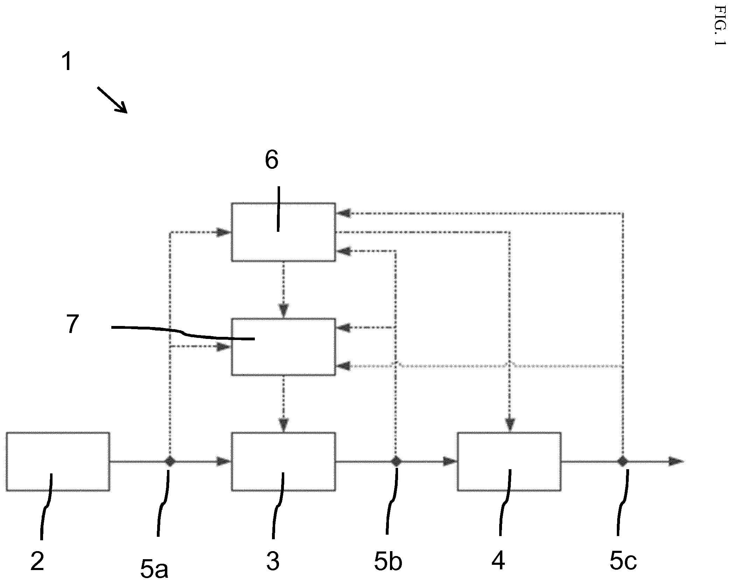

As described above, in this example, the process characteristics are detected from the at least one BioSMB outlet at the at least one measurement point (5c in Fig. 1). As described above, the concentrations of target protein and impurities can be varied by a manipulation of the pH and salt concentration of the wash 1 buffer, enabling the control of the desired monitored QAs (16). As both, salt concentration and pH value have an effect on both, target protein and impurity, it is clear for a skilled person that this results in a coupled 2x2 control problem. Two PID controllers as mathematical or modelling components (17) of the process control system are used, one for controlling $QA_1$ and the second for controlling $QA_2$. Defined steps in pH and salt concentration of the buffer in wash 1 are used to determine the plant model and disturbance model for controller design and decoupling of the control problem. Finally, two discrete PID controllers are applied to drive the QAs to the desired set point values (22). As the plant operation appears in discrete steps, a new set of modified actuating values for pH and salt concentration are implemented after a column phase switch. This is achieved by applying a zero order hold condition to the controller outlet (18).

B2) Discrete PID control using a mechanistic BioSMB model for feedback simulation

The same setting as described for B1 above is used except that the desired monitored QAs (20) are calculated based on a prediction of the process characteristics in a feed-forward manner by mechanistic model (21) which receives the modified actuating value (18) and a detected process characteristic upstream of the BioSMB (19). As in B1, two PID controllers (23) for the 2x2 control problem for $QA_1$ and $QA_2$, respectively controlling the target protein and impurity concentrations around the set point values (22) are designed using step tests and implemented using zero order hold condition at the PID controller outlet.

C1) Model based control using BioSMB feedback signal

The model-predictive controller (24) utilizes a surrogate model as optimizing controller to determine optimal modified actuating values (18) given by the salt concentration and the pH value for the wash 1 sub-step. Furthermore, a bias correction is possible by using a detected process characteristic at the BioSMB outlet (26), while (19) is a detected process characteristic upstream of the BioSMB, e.g. for model initialization. The model predictive controller first employs a heuristic optimizing algorithm to find promising candidates for a global solution before using a local solver to find each promising candidate's local minimum. To a skilled person it is clear that also a number of other optimizing algorithms can be used.

C2) Model based control using a mechanistic BioSMB model for feedback simulation

The same setting as described for C1 above is used except that the process characteristics (25) are calculated in a feed-forward manner by a mechanistic model (21) which receives the modified actuating value (18) and a detected process characteristic upstream of the BioSMB (19). The determined process characteristics are used in the model predictive controller (27) for bias correction, while the detected process characteristic upstream of the BioSMB is used for model initialization.

D) Model based control using a transfer function

In comparison to the previous examples, the ANN model used in this controller (28) relates the target and impurity concentration of each loading volume directly to the optimal modified actuating value (18), i.e. salt concentration and the pH value for the wash 1 sub-step. The ANN can be trained using the a detected process characteristic upstream of the BioSMB (19) as input and the solution of the corresponding optimization problem as described for the model based controller applied in C1 as the target. The required training data can therefore be generated by simulation of several scenarios applied to example C1, or by using experimental data obtained by applying C1 to a BioSMB plant. Hence, the applied controller in this example D is a feed forward controller, which is using a detected process characteristic upstream of the BioSMB input to directly calculate the optimal controller output for this process condition.

FIGURES

The figures show representative examples.

List of reference signs

1) process control system
2) perfusion process
3) unit operation
4) sequential chromatography
5) several possible measurement points (5a, 5b and 5c)
6) mathematical or modelling components
7) mathematical or modelling component
8) feedback signal based on at least one detected process characteristic
9) set point value
10) PID component (10)
11) modified actuating value (11)
12) detected process characteristic (12) from the at least one measurement point (5a) or (5b)
13) predictive model (13)
14) feedback value
15) one PID component
16) feedback signal based on at least one detected process characteristic from at least one measurement point (5c) in Fig. (1)
17) PID component that receives at least one feedback signal (16)
18) modified actuating value
19) detected process characteristic from the at least one measurement point (5a) or (5b) in Fig. (1)
20) feedback signal based on at least one predicted process characteristic
21) predictive model of the at least one sequential chromatography
22) set-point value
23) mathematical or modelling component
24) optimizing controller, here a non-linear model predictive controller for control of the at least one sequential chromatography
25) feedback signal
26) detected process characteristic
27) optimizing regulator used as a non-linear model predictive controller
28) transfer function
29) equilibrated column

30) Second Pass 1.1 Load Zone (30)
31) Second Pass 1.2 Load Zone (31)
32) Second Pass 2.1 Load Zone (32)
33) Second Pass 2.2 Load Zone (33)
34) Load 1.1 Load Zone (34)
35) Load 1.2 Load Zone (35)
36) Wash Zone 1.1 (36)
37) Wash Zone 1.2 (37
38) Wash Zone 2 (38).
39) Conditioning zone before elution (39)
40) Calculation of phase compositions (40)
41) Eluate composition (41)
42) Outlet compositions not of interest (42)
43) Wash buffer 1 (43)
44) Wash buffer 2 (44)
45) Wash 1.1 displacement (45)
46) Load Zone (46)
47) Wash Zone (47)
48) Feed Composition (48)

Fig. 1 depicts a schematic representation of a system as described herein. In this Example the system comprises a perfusion process (2), a unit operation (3), i.e. a filtration. The sequential chromatography (4) is carried out using a BioSMB device and following the sequential chromatography the fluid stream is further processed as indicated by the arrow. Moreover, the at least one process control system (1) comprising at least one mathematical or modelling component influencing the at least one actuator in real-time comprises two mathematical or modelling components (6) and (7). In this example, the at least one mathematical or modelling component (7) controls the filtration unit operation and the at least one mathematical or modelling component (6) controls or regulates the BioSMB depending on the configuration of the at least one process control system. In this example several possible measurement points (5a, 5b and 5c) are shown, i.e. a first possible measurement point (5a) is located between the perfusion process (2) and the unit operation (3). Alternatively or in addition, a second measurement point (5b) can be located between the Unit Operation (3) and the sequential chromatography (4). Alternatively or in addition a third measurement point (5c) can be located downstream of the sequential Chromatography (4). At any of these measurement points (5a-5c), i.e. also at all measurement points or at one or two of these measurement points at least one process characteristic of the fluid stream is measured. The at least one detected process characteristic is transmitted in form of a signal, depicted by the dotted arrows depending on which measurement point is used, to the mathematical or modelling components (6) and/or (7) of at least one process control system, wherein based on the at least one process characteristic of the fluid stream the at least one mathematical or modelling component (6) and/or (7) calculates a modified actuating value which is used to influence the at least one sequential chromatography in real-time either via directly influencing at least one actuator of the sequential chromatography (not shown) or via influencing at least one actuator upstream of the sequential chromatography (not shown). In one example, the system comprises at least two measurement points one upstream of the at least one sequential chromatography (e.g. at 5a or 5b), where the process control system receives all available process characteristics and a second measurement point at the output of the sequential chromatography.

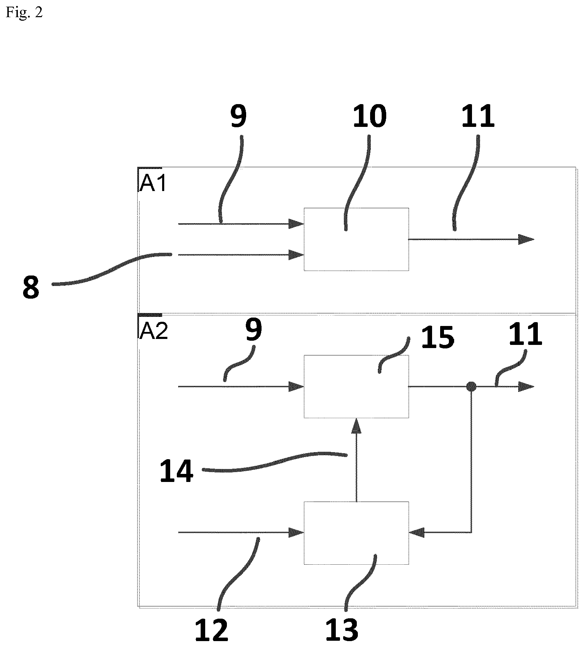

Fig. 2 schematically depicts two situations in which the at least one process control system comprises different control structures.

In the situation A1 the at least one process control system comprises at least one mathematical or modelling component here a controller for control of the at least one means - corresponding to (3) in Fig. 1 - which comprises at least one PID component (10) - corresponding to (7) in Fig. 1 - that receives at least one feedback signal based on at least one detected process characteristic (8) from a measurement point (5b) in Fig.(1) upstream of the at least one sequential chromatography and downstream of the at least one means. Moreover, also the set point value (9) influences the mathematical or modelling component (10) and the process control system outputs the modified actuating value (11).

In one example scenario of situation A1 the at least one modelling component of the at least one process control system receives information about the harvest concentration which enters a continuous concentration unit operation upstream of a hold-up tank, wherein the hold-up tank itself is immediately upstream of the at least one sequential chromatography. Moreover, the process control system receives information on about the accumulated volume of fluid flow entering the hold-up tank, the volume of fluid in the hold-tank as well as the antibody concentration in the hold-tank and the flow to the sequential chromatography.

In the situation A2 the at least one process control system comprises at least one mathematical or modelling component here a regulator used as controller - corresponding to (7) in Fig. 1 - for control of the at least one means which comprises at least one PID component (15) that receives at least one feedback signal based on at least one predicted process characteristic from at least one predictive model (13) of the at least one means, wherein the predictive model of the at least one means receives at least one detected process characteristic (12) from the at least one measurement point (5a) or (5b) in Fig. 1. Moreover, also the set point value (9) influences the mathematical or modelling component (15) and the process control system outputs the modified actuating value (11).

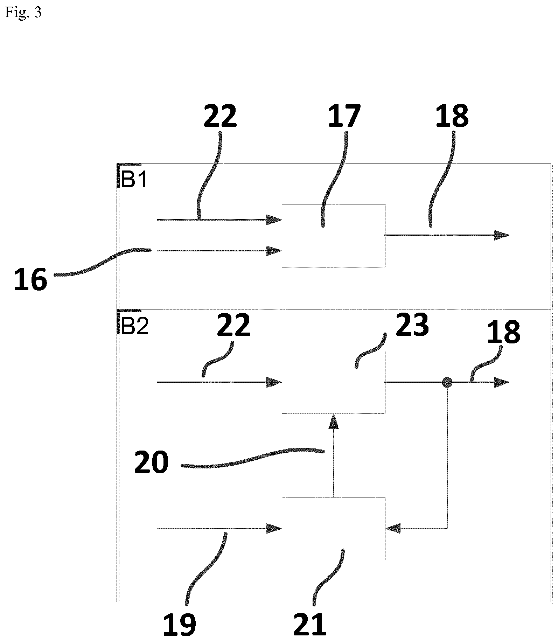

Fig. 3 schematically depicts two situations in which the system described herein comprises different mathematical or modelling components

In the situation B1 the process control system comprises at least one mathematical or modelling component - corresponding to (6) in Figure 1. - here a controller for control of the at least one sequential chromatography - corresponding to (4) in Fig. 1 - which comprises at least one PID component (17) that receives at least one feedback signal (16) based on at least one detected process characteristic from at least one measurement point (5c) in Fig. (1) at the output of the sequential chromatography. Moreover, also the set point value (22) influences the mathematical or modelling component (17) and the process control system outputs the modified actuating value (18).

In the situation B2 the process control system comprises at least one mathematical or modelling component - corresponding to (6) in Fig. 1 - here a regulator used as controller for control of the at least one sequential chromatography - corresponding to (4) in Fig. 1 - which comprises at least one PID component (23) that receives at least one feedback signal (20) based on at least one predicted process characteristic from at least one predictive model (21) of the at least one sequential chromatography, wherein the predictive model of the at least one sequential chromatography receives at least one detected process characteristic (19) from the at least one measurement point (5a) or (5b) in Fig. (1). Moreover, the set point value (22) influences the mathematical or modelling component (23) and the process control system outputs the modified actuating value (18).

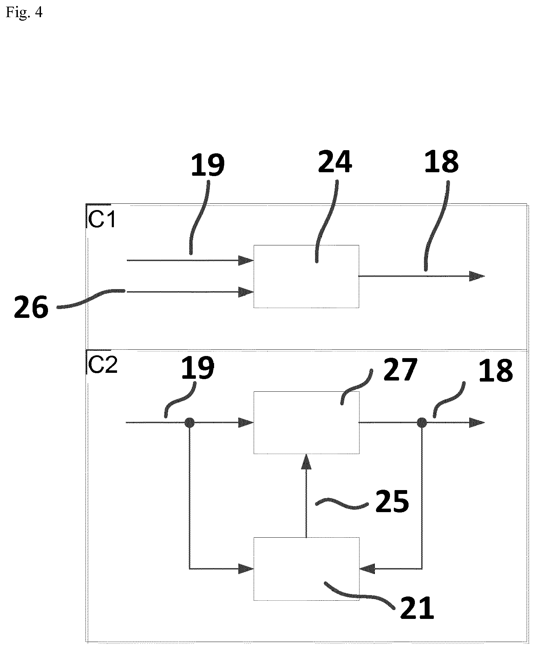

Fig. 4 schematically depicts two situations in which the system described herein comprises different mathematical or modelling components

In the situation C1 the at least one process control system comprises at least one mathematical or modelling component - corresponding to (6) in Fig. 1 - here an optimizing controller, such as a non-linear model predictive controller (24) for control of the at least one sequential chromatography - corresponding to (4) in Fig. 1 - , which receives at least one detected process characteristic (26) as feedback signal from at least one measurement point (5c) in Fig. (1) at the output of the sequential chromatography. Moreover it can receive at least one detected process characteristic (19) from at least one measurement point (5a or 5b) in Fig. (1) upstream of the sequential chromatography, e.g. for model initialization.

The process control system outputs a modified actuating value (18).

In the situation C2 the at least one process control system comprises at least one mathematical or modelling component - corresponding to (6) in Fig. 1 - here a regulator used as controller, here an optimizing regulator used as a non-linear model predictive controller (27), for control of the at least one sequential chromatography - corresponding to (4) in Fig. 1 - which receives at least one predicted process characteristic as feedback signal (25) based on at least one predictive model (21) of the at least one sequential chromatography, wherein the predictive model of the at least one sequential chromatography receives at least one detected process characteristic (19) from the at least one measurement point (5a) or (5b) in Fig. (1), upstream of the at least one sequential chromatography. Moreover the optimizing regulator used as a non-linear model predictive controller can receive the at least one detected process characteristic (19) from at least one measurement point (5a or 5b) in Fig. (1) upstream of the sequential chromatography in addition, e.g. for model initialization. The process control system outputs the modified actuating value (18).

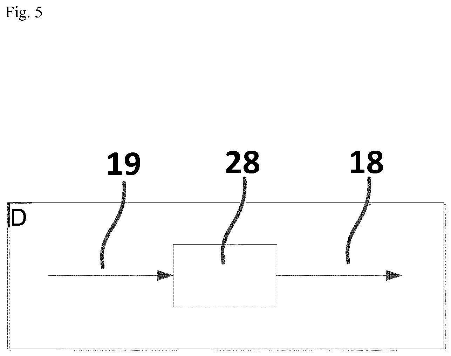

Fig. 5 schematically depicts a situation in which the at least one process control system comprises at least one mathematical or modelling component - corresponding to (6) in Fig. 1 - here a transfer function (28) wherein the at least one transfer function (28) receives at least one detected process characteristic (19) from at least one measurement point (5a) or (5b) in Fig. 1 and wherein the at least one transfer function calculates the modified actuating value (18) for manipulating the at least one sequential chromatography - corresponding to (4) in Fig. 1.

Fig. 6 depicts the circular chronogram of a BioSMB Process. The outer ring sections denote the fluid stream into the columns C1 - C5, the inner ring the fluid stream out of the columns. The positions of the column depict the initial start position at the initiation of the calculation of the modified actuating value. During the run time, the columns inlet switches are translated into a clock-wise circulation of the column marker lines.

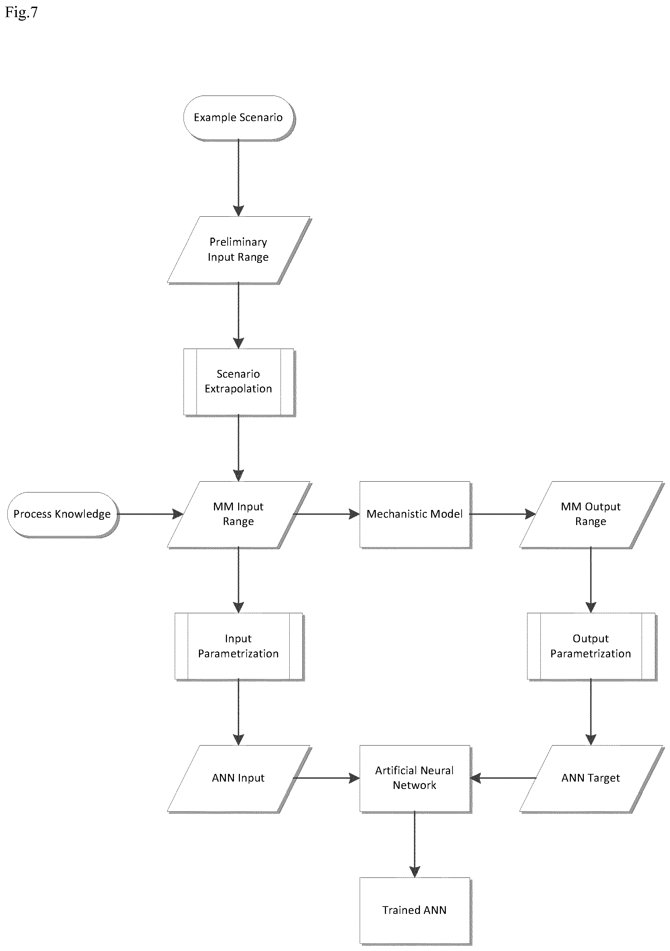

Fig. 7 schematically depicts the workflow for the generation of an ANN surrogate model. First, the control scenario, i.e. the exemplary scenario including the sub-steps of the defined control scenario were defined. Subsequently, the relevant input data ("preliminary input range") was defined and a scenario extrapolation was performed. The extrapolated relevant input data together with process knowledge was then used as input data for a mechanistic model as well as parametrized to obtain the data used as input for the ANN surrogate model. The mechanistic model determined accurate outputs to each input signal of the input data. Then the ANN was trained using the generated parametrized input and output data respectively resulting in a trained ANN.

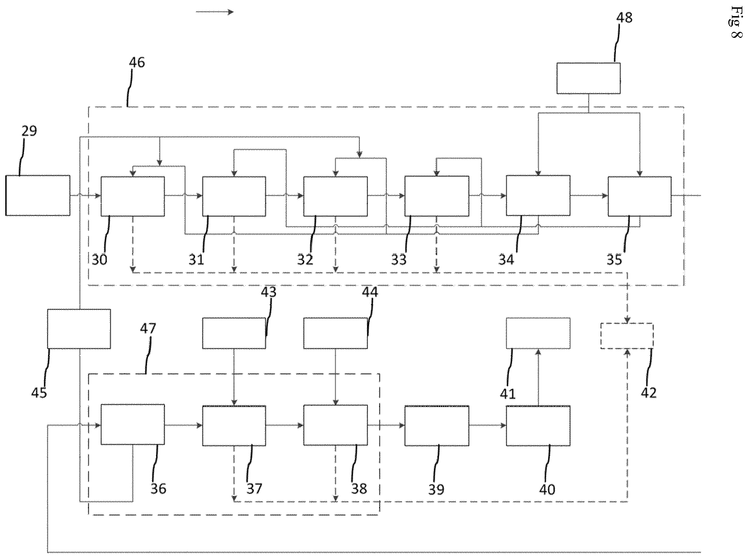

Fig. 8 schematically depicts the linkage of the ANNs used to calculate the eluate target and impurity concentration based on the feed concentration of the control cycle of the sequential chromatography and the salt concentration and pH of the Wash steps of the control cycle. The blocks illustrate the ANNs of the sub steps. In detail the sub-steps are as follows:

- Second Pass 1.1 Load Zone (30)
- Second Pass 1.2 Load Zone (31)
- Second Pass 2.1 Load Zone (32)
- Second Pass 2.2 Load Zone (33)
- Load 1.1 Load Zone (34)
- Load 1.2 Load Zone (35)
- Wash Zone 1.1 (36)
- Wash Zone 1.2 (37)
- Wash Zone 2 (38).

As well as the following input and output data

- Conditioning zone before elution (39)
- Calculation of phase compositions (40)
- Eluate composition (41)
- Outlet compositions not of interest (42)
- Wash buffer 1 (43)
- Wash buffer 2 (44)
- Wash 1.1 displacement (45)
- Load Zone (46)
- Wash Zone (47)
- Feed Composition (48)

The input data to each ANN is depicted as arrows entering the block, the output data as arrows exiting it. At first, an equilibrated column (29) is assumed. Its composition as well as the input data of the fluid stream of the regarded sub step is considered as input data for the first ANN "Second Pass 1.1" (30). This ANN calculates the column concentrations of the regarded components in all phases, i.e. the column composition. This is the output data of the ANN. The next ANN uses this data as input data as well as the fluid stream of the regarded sub step. The calculations of the output data input data linkage between the ANNs in omitted in this illustration. For some of the ANNs, such as the "Load 1.1" (34), the output data does not only consist of the column composition (horizontal arrow exiting the ANN block) but also the outlet fluid concentration. This is depicted as the vertical arrow exiting the ANN block. This output data is used in multiple ANNs as input data. In the end of the calculations, the eluate composition (41), i.e. the target and impurity concentration as well as the yield of the eluate, is determined.

**Claims**

1. System for influencing a sequential chromatography comprising at least

    • a fluid stream
    • at least one measurement point
    • at least one actuator
    • at least one sequential chromatography
    • at least one process control system influencing the at least one actuator in real-time

    wherein

    ◦ at the at least one measurement point at least one characteristic of the fluid stream corresponding to at least one actual process characteristic is measured, and
    ◦ wherein said at least one detected process characteristic is transmitted in form of a signal to the at least one process control system,
    ◦ wherein based on the at least one detected process characteristic of the fluid stream at least one mathematical or modelling component of the at least one process control system is configured to calculate at least one modified actuating value which is used to influence the at least one sequential chromatography in real-time either via directly influencing at least one actuator of the sequential chromatography and/or via influencing at least one actuator upstream of the sequential chromatography.

2. System according to claim 1 further comprising at least one unit operation.

3. System according to claims 1-2 wherein the at least one process control system further comprises

a) at least one regulator, at least one regulator used as controller and/or at least one controller for control of at least one means, wherein the at least one regulator or controller for the at least one means comprises at least one PID component which receives at least one signal comprising the at least one detected process characteristic from the at least one measurement point OR wherein the at least one regulator used as controller for the at least one means comprises at least one PID component which receives at least one predictive feedback signal based on at least one predicted process characteristic from at least one predictive model of the at least one means and/or

b) at least one regulator, at least one regulator used as controller and/or at least one controller for control of the at least one sequential chromatography, wherein the at least one controller or regulator used as controller for control of the at least one sequential chromatography comprises at least one PID component which receives at least one feedback signal based on at least one detected process characteristic from a measurement point at the output of the sequential chromatography OR wherein the regulator used as controller for control of the at least one sequential chromatography comprises at least one PID component which receives at least one predictive feedback signal based on at least one predicted process characteristic from at least one predictive model of the at least one sequential chromatography and/or

c) at least one controller such as a non-linear model predictive controller of the at least one sequential chromatography wherein the controller for the sequential chromatography receives at least one signal comprising the at least one detected process characteristic from the at least one measurement point, which in this case is upstream of the at least one sequential chromatography, and wherein the controller for the sequential chromatography in addition receives at least one feedback signal based on at least one detected process characteristic from at least one second measurement point at the output of the sequential chromatography OR wherein the at least one controller of the at least one sequential chromatography receives at least one signal comprising the at least one detected process characteristic from the at least one measurement point, which in this case is upstream of the at least one sequential chromatography, and wherein the controller for the sequential chromatography in addition receives at least one feedback signal based on at least one predicted process characteristic from at least one predictive model of the at least one sequential chromatography and/or

d) at least one transfer function comprising at least one empirical model which takes into account the at least one signal comprising the at least one detected process characteristic from the at least one measurement point

**characterized in that** each of the mathematical or modelling components described under a)-d)) is configured to calculate at least one modified actuating value which is used to influence the at least one sequential chromatography in real-time via the at least one actuator.

4. System according to claim 3, wherein the at least one regulator, the at least one regulator used as controller or the at least one controller for the control of the at least one means is a regulator or controller for a unit operation.

5. System according to claims 1-4 further comprising at least one residence time device or at least one intermediate bag.

6. System according to claims 1-5 wherein the at least one measurement point is selected from group consisting of a detector or a system outlet such as a three way valve.

7. System according to claims 3-5, wherein a feedback signal is used to adapt the predictive model of the at least one means or the at least one sequential chromatography, for example to changing operating conditions.

8. Method for influencing a sequential chromatography in real time comprising at least

• Measuring at least one characteristic of a fluid stream corresponding to at least one actual process characteristic at least one measurement point,
• Transmitting said at least one detected process characteristic in form of a signal to at least one process control system

• Calculating at least one modified actuating value based on the at least one detected process characteristic of the fluid stream using at least one mathematical or modelling component of the at least one process control system configured for the calculation

• Using the at least one modified actuating value to influence the at least one sequential chromatography in real-time either via directly influencing at least one actuator of the sequential chromatography and/or via influencing at least one actuator upstream of the sequential chromatography.

9. Method according to claim 8 wherein the at least one modified actuating value is calculated using at least one configured mathematical or modelling component of the at least one process control system **characterized in that** the mathematical or modelling component comprises at least one surrogate model.

10. Method according to claim 9 wherein the mathematical or modelling component comprises at least one surrogate sub-model and two or more surrogate sub models are linked together or a surrogate sub model is combined with a mechanistic sub-model.

11. Method according to claim 10 wherein the mathematical or modelling component comprises at least one sub models and two or more sub models are linked together **characterized in that** one or more additional calculations are performed before the output of a given sub model is used as input for another sub model.

12. Method according to anyone of claims 9-11, wherein at least one surrogate model or at least one surrogate sub-model comprises at least one artificial neural network.

13. Method according to claim 8, wherein the at least one process control system comprises at least one mathematical or modelling component and is configured to calculate the at least one modified actuating value wherein the method further comprises the following steps:

   • Defining the control scenario
   • Defining the sub-steps of the defined control scenario.
   • Defining the relevant input data of each sub-step
   • Using at least one mechanistic model to determine accurate outputs to each input signal of the relevant input data
   • Training at least one surrogate model using the input data and output data generated above
   • Calculating a modified actuating value which is used to influence the at least one sequential chromatography in real-time either via directly influencing at least one actuator of the sequential chromatography and/or via influencing at least one actuator upstream of the sequential chromatography using the trained at least one surrogate model.

14. Use of a method according to anyone of claims 10-13 for generation of an overall model which can be used either for prediction or control purposes or both.

EP 3 763 429 A1

FIG. 1

Fig. 2

Fig. 3

Fig. 4

Fig. 5

Fig. 6

BioSMB Circular Chronogram

Fig.7

```
                        ╭─────────────────╮
                        │ Example Scenario │
                        ╰────────┬────────╯
                                 │
                                 ▼
                        ╱─────────────────╱
                       ╱   Preliminary   ╱
                      ╱   Input Range   ╱
                     ╱─────────────────╱
                                 │
                                 ▼
                        ┌─────────────────┐
                        │    Scenario     │
                        │  Extrapolation  │
                        └─────────────────┘
                                 │
                                 ▼
  ╭──────────────────╮   ╱─────────────────╱        ┌──────────────────┐        ╱─────────────────╱
  │ Process Knowledge │──▶│    MM Input    ╱────────▶│ Mechanistic Model │───────▶│   MM Output    ╱
  ╰──────────────────╯   ╱     Range     ╱          └──────────────────┘        ╱     Range     ╱
                        ╱─────────────────╱                                     ╱─────────────────╱
                                 │                                                      │
                                 ▼                                                      ▼
                        ┌─────────────────┐                                    ┌──────────────────┐
                        │     Input       │                                    │     Output       │
                        │ Parametrization │                                    │ Parametrization  │
                        └─────────────────┘                                    └──────────────────┘
                                 │                                                      │
                                 ▼                                                      ▼
                        ╱─────────────────╱   ┌──────────────────┐             ╱─────────────────╱
                       ╱    ANN Input    ╱───▶│ Artificial Neural │◀───────────│    ANN Target   ╱
                      ╱─────────────────╱     │     Network      │            ╱─────────────────╱
                                              └────────┬─────────┘
                                                       │
                                                       ▼
                                              ┌──────────────────┐
                                              │   Trained ANN    │
                                              └──────────────────┘
```

Fig 8

Europäisches
Patentamt

European
Patent Office

Office européen
des brevets

# EUROPEAN SEARCH REPORT

Application Number

EP 19 18 4911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2011/073548 A1 (WILLIAMS ALAN M [US] ET AL) 31 March 2011 (2011-03-31)<br>* paragraph [0031] - paragraph [0034] *<br>* paragraph [0042] - paragraph [0054] *<br>----- | 1-8<br><br>9-12,14 | INV.<br>B01D15/18<br>G01N30/86<br><br>ADD.<br>G01N30/88 |
| X<br>Y | EP 3 173 782 A1 (KARLSRUHER INST FÜR TECH [DE]) 31 May 2017 (2017-05-31)<br>* paragraph [0013] - paragraph [0014] *<br>* paragraph [0036] - paragraph [0045] *<br>* paragraph [0067] - paragraph [0076] *<br>----- | 1-8<br><br>9-12,14 | |
| X | ABEL S ET AL: "Optimizing control of simulated moving beds-linear isotherm", JOURNAL OF CHROMATOGRAPHY A, ELSEVIER, AMSTERDAM, NL,<br>vol. 1033, no. 2,<br>16 April 2004 (2004-04-16), pages 229-239, XP004494915,<br>ISSN: 0021-9673, DOI:<br>10.1016/J.CHROMA.2004.01.049<br>* abstract *<br>* 3. SMB control;<br>figure 2 *<br>* 3.2. State estimation *<br>* 4. Results and discussion *<br>----- | 1-14 | |
| Y | WOOHYUN YUN ET AL: "Successive Linearization-based Repetitive Control of Simulated Moving Bed Process", SICE-ICCAS 2006 INTERNATIONAL JOINT CONFERENCE, IEEE, PISCATAWAY, NJ, USA,<br>1 October 2006 (2006-10-01), pages 2467-2471, XP031049814,<br>ISBN: 978-89-950038-4-8<br>* abstract *<br>* 4.21. Set point tracking *<br>-----<br>-/-- | 9-12,14 | TECHNICAL FIELDS SEARCHED (IPC)<br><br>B01D<br>G01N |

The present search report has been drawn up for all claims

| Place of search | Date of completion of the search | Examiner |
|---|---|---|
| Munich | 10 January 2020 | Fourgeaud, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 18 4911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG YONGJIN ET AL: "Accelerating optimization and uncertainty quantification of nonlinear SMB chromatography using reduced-order models", COMPUTERS & CHEMICAL ENGINEERING, PERGAMON PRESS, OXFORD, GB, vol. 96, 30 September 2016 (2016-09-30), pages 237-247, XP029819527, ISSN: 0098-1354, DOI: 10.1016/J.COMPCHEMENG.2016.09.017 * abstract * * 2.3. Optimization of SMB chromatography * ----- | 9-12,14 | |
| A | VILAS C ET AL: "Combination of multi-model predictive control and the wave theory for the control of simulated moving bed plants", CHEMICAL ENGINEERING SCIENCE, OXFORD, GB, vol. 66, no. 4, 15 February 2011 (2011-02-15), pages 632-641, XP027581986, ISSN: 0009-2509 [retrieved on 2010-12-31] * the whole document * ----- | 1-14 | |

TECHNICAL FIELDS
SEARCHED (IPC)

The present search report has been drawn up for all claims

| Place of search | Date of completion of the search | Examiner |
|---|---|---|
| Munich | 10 January 2020 | Fourgeaud, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 18 4911

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2020

| Patent document cited in search report | | Publication date | Patent family member(s) | | Publication date |
|---|---|---|---|---|---|
| US 2011073548 | A1 | 31-03-2011 | AU | 2010298768 A1 | 15-03-2012 |
| | | | CN | 102574026 A | 11-07-2012 |
| | | | EP | 2480305 A1 | 01-08-2012 |
| | | | JP | 5749270 B2 | 15-07-2015 |
| | | | JP | 2013506127 A | 21-02-2013 |
| | | | US | 2011073548 A1 | 31-03-2011 |
| | | | WO | 2011037522 A1 | 31-03-2011 |
| EP 3173782 | A1 | 31-05-2017 | EP | 3173782 A1 | 31-05-2017 |
| | | | EP | 3243073 A1 | 15-11-2017 |
| | | | US | 2018339244 A1 | 29-11-2018 |
| | | | WO | 2017088979 A1 | 01-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. BÄRMANN ; F. BIEGLER-KÖNIG.** On a class of efficient learning algorithms for neural networks. *Neural Networks,* 1992, vol. 5 (1), 139-144